# EUROPÄISCHE PATENTSCHRIFT

(11) **EP 2 029 313 B1**
(45) Veröffentlichungstag und Bekanntmachung des Hinweises auf die Patenterteilung: **08.12.2010**
(21) Anmeldenummer: 06753872.8
(22) Anmeldetag: 24.05.2006
(51) Int. Cl.: B23K 26/42, B23K 37/04, B23Q 1/03, G05B 19/4097, G05B 19/4093, G06F 19/00, B23K 26/38, B26D 7/01

(54) **VERFAHREN ZUR OPTIMIERUNG EINER ANORDNUNG VON TRAGPUNKTSPITZEN AN AUFLAGEELEMENTEN EINER WERKSTÜCKAUFLAGE UNTER VERWENDUNG VON DATEN EINER SCHACHTELUNG VON GUT- UND RESTTEILEN**
METHOD OF OPTIMIZING AN ARRANGEMENT OF SUPPORTING POINT TIPS ON REST ELEMENTS OF A WORK REST USING DATA FROM NESTING OF FINISHED AND RESIDUAL PARTS
PROCÉDÉ POUR OPTIMISER UN AGENCEMENT DE POINTES PONCTUELLES DE SUPPORT SUR DES ÉLEMENTS D'APPUI D'UN PORTE-PIÈCE, UTILISANT DES DONNÉES D'UN EMBOÎTEMENT DE PIÈCES DE MATÉRIAU ET DE PIÈCES RÉSIDUELLES

(43) Veröffentlichungstag der Anmeldung: 04.03.2009
(73) Patentinhaber: TRUMPF Werkzeugmaschinen GmbH + Co. KG, 71254 Ditzingen (DE)
(72) Erfinder: BLASER, Martin, 88267 Vogt (DE)
(74) Vertreter: Maser, Jochen
(86) Internationale Anmeldenummer: PCT/EP2006/005003
(87) Internationale Veröffentlichungsnummer: WO 2007/134631

(56) Entgegenhaltungen:
- EP-A1- 0 507 033
- GB-A- 2 306 904
- JP-A- 8 132 228
- US-A- 5 278 953
- US-A1- 2002 107 607
- US-A1- 2004 016 731

## Beschreibung

Die Erfindung betrifft ein Verfahren zur Optimierung einer Anordnung von Tragpunktspitzen an Auflageelementen einer Werkstückauflage in einer Bearbeitungsanlage, bei dem ein Werkstück mit einem Schneidstrahl, insbesondere Laserstrahl, bearbeitet wird (siehe, z.B. JP 08-132228 A).

Zur Bearbeitung von insbesondere tafelförmigen Werkstücken in Laserbearbeitungsanlagen ist gemäß der JP 08-132228 A eine Werkstückauflage vorgesehen, die einen Rahmen mit mehreren, vorzugsweise parallel zueinander angeordneten Auflageelementen aufweist, auf denen das zu bearbeitende Werkstück aufliegt. Die Auflageelemente weisen zumeist in regelmäßigen Abständen Tragpunktspitzen auf und bilden ein Auflagefeld für das oder die Werkstücke.

Solche Laserbearbeitungsanlagen umfassen einen relativ zur Werkstückauflage bewegbaren Laserschneidkopf, um mit einem Laserstrahl ein weitgehend ruhendes Werkstück, das auf den Tragpunktspitzen der Auflageelemente aufliegt, zu bearbeiten. Während der Bearbeitung kommt es beim Überfahren der Tragpunktspitzen durch den Laserstrahl zu Problemen, wie beispielsweise Beschädigungen der Tragpunktspitzen durch Aufschweißungen, Beschädigung der Tragpunktspitzen durch Wegschmelzen und/oder ein ungleichmäßiger Schnitt zwischen dem Gutteil und Restteil, da die Schneidverhältnisse an den Tragpunktspitzen anders als an den benachbarten Tragpunktspitzen sind.

Um die vorgenannten Probleme bei der Bearbeitung der Werkstücke zu reduzieren, geht aus der DE 38 03 918 A1 eine Werkstückauflage hervor, bei welcher die Auflageelemente in Abhängigkeit der Position des Laserstrahls während der Bearbeitung versenkbar sind. Durch eine mit dem Schneidkopf gekoppelte Mechanik wird jeweils dasjenige Auflageelement versenkt, das bei der Bearbeitung im Auftreffbereich des Laserstrahles liegt.

Bei dieser Ausführungsform wird über die gesamte Länge der Auflageelemente ein Absenken der Tragpunktspitzen bewirkt. Diese Ausführungsform weist zwar den Vorteil auf, dass ein Aufschweißen der Tragpunktspitzen beim Überfahren während des Schneidvorganges verringert wird. Jedoch kann es zu ungleichmäßigen Schnitten kommen, insbesondere dann, wenn ein Werkstück fast vollständig aus der Werkstücktafel ausgeschnitten ist und mit einem Ende an den abgesenkten Tragpunktspitzen aufliegt.

Aus der US 2004/016731 A geht eine Werkstückauflage hervor, welche mit separaten ersten und zweiten Auflageelementen ausgebildet ist. Diese separaten ersten und zweiten Auflageelemente dienen jeweils zur einstellbaren Unterstützung eines Gutteils bzw. eines Restteils, um entfernt oder beabstandet zum Trennschnitt angeordnet zu werden. Durch diese Positionierung der ersten und zweiten Auflageelemente wird ein Anbacken der Gutteile an den Tragpunktspitzen vermieden.

Solche mechanischen Systeme sind in der Herstellung sehr aufwändig. Darüber hinaus kann durch die Verschmutzung der Werkstückauflage durch Abbrand, Materialspritzer oder dergleichen die Funktionsfähigkeit innerhalb kurzer Zeit beeinträchtigt werden. Somit ist nicht nur der Anschaffungsaufwand, sondern auch die Wartung sehr kostenintensiv.

Aus der US 2002/107607 A1 ist eine Werkstückauflage bekannt, welche aus kreuzweise zueinander angeordneten Auflageelementen besteht. Diese Auflageelemente weisen eine Kontur auf, die der herzustellenden dreidimensionalen Kontur entspricht, so dass eine vollständige Auflagefläche für die herzustellende Kontur gebildet ist. Diese Auflageelemente weisen den Nachteil auf, dass bei Überfahren der Auflageelemente mit dem Schneidstrahl Aufschweißungen entstehen können. Ebenso kann ein teilweises Wegschmelzen der Auflageelemente sowie ein Anbacken der Auflageelemente an der herzustellenden Kontur entstehen.

Der Erfindung liegt deshalb die Aufgabe zugrunde, ein Verfahren zur Optimierung einer Anordnung von Tragpunktspitzen an Auflageelementen einer Werkstückauflage zu schaffen, durch welches die Tragpunktspitzen einem geringen oder keinem Verschleiß unterliegen sowie eine hohe Bearbeitungsqualität und eine sichere Aufnahme von getrennten Gut- und Restteilen, insbesondere für mehrere Tafelbelegungen, ermöglicht wird.

Diese Aufgabe wird erfindungsgemäß durch die Merkmale des Verfahrens gemäß dem Anspruch 1 gelöst. Weitere vorteilhafte Ausgestaltungen der Erfindung sind in den weiteren abhängigen Ansprüchen angegeben.

Durch das erfindungsgemäße Verfahren ist die Ausgestaltung einer tafelspezifischen Werkstückauflage ermöglicht, so dass die Tragpunktspitze oder die Tragpunktspitzen des Auflageelementes oder der Auflageelemente, welche das Werkstück tragen, nicht oder überwiegend nicht von einem Schneidstrahl überfahren werden und gleichzeitig eine sichere Aufnahme des zumindest einen Gut- und Restteils gegeben ist. Darüber hinaus können Beschädigungen der geschnittenen Gutteile durch Strahlreflexion oder Rückspritzer sowie ein Verbacken der Gutteile mit den Tragpunktspitzen und die damit einhergehenden Probleme beim Entladen, insbesondere bei der Automatisierung, vermieden werden. Zur Ermittlung der Lage der Tragpunktspitzen in einer Auflageebene innerhalb der Werkstückauflage werden die Daten einer Schachtelung von zumindest einem Gut- und Restteil von der zumindest einen, zur Bearbeitung anstehenden Tafelbelegung erfasst. Daraus lassen sich sowohl die Flächengeometrie des zumindest einen Gutteils als auch der Verlauf des Schneidspaltes ermitteln. Somit liegen für die nachfolgende, zur Bearbeitung anstehende Tafelbelegung spezifische Daten vor, welche zur Auswahl der Positionierung der Tragpunktspitzen als auch der Anzahl der Tragpunktspitzen verarbeitet werden. Dabei wird zunächst die Position der Tragpunktspitzen innerhalb der Auflageebene der Werkstückauflage bestimmt und insbesondere anschließend die Tragpunktspitze oder die Tragpunktspitzen dem jeweiligen Auflageelement zugeordnet, wobei die Auflageelemente mit Positionsnummern versehen werden, damit eine einfache und schnelle Bestückung eines Rahmens der Werkstückauflage ermöglicht ist. Die Position der Auflageelemente innerhalb des Rahmens ist ebenfalls bekannt, so dass eine Verknüpfung der Tragpunktspitzen mit dem nächstliegenden Auflageelement vorgenommen wird.

Nach einer vorteilhaften Ausgestaltung des Verfahrens ist vorgesehen, dass die Daten von mehreren nacheinander abzuarbeitenden Tafelbelegungen kumuliert in Bezug auf die Flächengeometrie des zumindest einen Gutteils und dem Verlauf des Schneidspaltes jeder Tafelbelegung erfasst werden. Eine optimale Lage der Tragpunktspitzen führ mehrere Tafelbelegungen wird ermittelt, welche wiederum den einzelnen Auflageelementen zugeordnet werden. Dadurch können einzelne Auflageelemente für mehrere aufeinander folgende Tafelbelegungen ausgebildet werden, ohne dass für jede einzelne Tafelbelegung, die von der vorherigen abweicht, eine Anpassen des oder der Auflageelemente erforderlich ist. Des Weiteren können zusätzliche Auflageelemente mit Tragpunktspitzen ausgebildet werden, die spezifisch für jede Tafelbelegung, die bei der Kumulierung berücksichtigt wurde, eingesetzt wird. Dadurch kann die Rüstzeit der Werkstückauflage verringert werden, in dem jeweils einzelne Auflageelemente entnommen oder hinzugefügt oder auch nur innerhalb des Rahmens der Werkstückauflage umgesetzt werden.

Nach einer weiteren vorteilhaften Ausgestaltung der Erfindung ist vorgesehen, dass die zumindest eine Tragpunktspitze an dem Auflageelement mit einem Schneidstrahl ausgeschnitten wird. Dadurch kann die Bearbeitungsanlage zur Herstellung der eigenen Auflageelemente verwendet werden. Aufgrund der ermittelten Daten beziehungsweise Koordinaten in X- und Y-Richtung innerhalb der Auflageebene für die Tragpunktspitzen kann eine schnelle Abarbeitung ermöglicht werden, um Auflageelemente mit den ermittelten Tragpunktspitzen zur Bildung einer neuen Auflageebene zu erstellen. Alternativ ist vorgesehen, dass die Tragpunktspitzen als separate Tragelemente ausgebildet sind, die auf das Auflageelement aufgesetzt werden. Solche Tragelemente können als Lagerware bereitgehalten oder in der Bearbeitungsmaschine zugeschnitten werden, so dass manuell oder mit einem Handhabungssystem die Tragelemente exakt auf den Auflageelementen positioniert werden. Eine weitere alternative Ausgestaltung sieht vor, dass verschiebbare oder klappbare Tragelemente vorgesehen sind, die auf dem Auflageelement in die ermittelte Position verschoben oder positioniert werden. Eine weitere alternative Ausführungsform sieht vor, dass jedes Auflageelement eine Reihe von Tragpunktspitzen umfasst, wobei die nicht benötigten Tragpunktspitzen für die Werkstückauflage beziehungsweise die zu den ermittelten Tragpunktspitzen benachbarten Tragpunktspitzen abgebrochen oder umgebogen werden, so dass diese außerhalb der Auflageebene positioniert sind. Die vorbeschriebenen Ausführungsmöglichkeiten eignen sich alle zur Optimierung einer Anordnung von Tragpunktspitzen an Auflageelementen für eine Werkstückauflage.

Nach einer weiteren vorteilhaften Ausgestaltung des Verfahrens ist vorgesehen, dass zur Ermittlung der Lage der Tragpunktspitzen eine Kollisionsprüfung mit dem Verlauf der Schneidkontur für das zumindest eine Gutteil erfolgt. Dadurch kann während oder nach der Ermittlung einer geeigneten Koordinate zur Positionierung der Tragpunktspitze geprüft werden, ob ein Überfahren eines Schneidstrahles bei der zu Bearbeitung anstehenden Tafelbelegung erfolgt. Sofern eine solche Kollision gegeben wäre, erfolgt eine erneute Optimierung für die Anordnung von Tragpunktspitzen an Auflageelementen, indem durch weitere Berechnungsroutinen und Verschiebung von einzelnen Positionen zur Werkstückaufnahme für die Tragpunktspitzen eine weitere Lage ermittelt wird.

Nach einer weiteren vorteilhaften Ausgestaltung der Erfindung ist vorgesehen, dass die Lage der Tragpunktspitzen in Abhängigkeit einer Nullpunktlage für zumindest ein auf der Werkstückauflage aufliegendes Werkstück ermittelt und ausgegeben wird. Insbesondere bei der Berücksichtigung von mehreren unterschiedlichen Tafelbelegungen ist eine exakte Positionierung des zumindest einen Werkstücks auf der Werkstückauflage erforderlich, damit die Tragpunktspitzen benachbart zur Schneidkontur positioniert sind, um ein Verbacken der Gut- und/oder Restteile mit den Auflageelementen sowie Beschädigungen der geschnittenen Teile durch Strahlreflexion oder Rückspritzer zu vermeiden. Bevorzugt ist diese Nullpunktlage auch als Referenz für den Schneidstrahl beziehungsweise Schneidkopf einer Bearbeitungsanlage festgelegt.

Nach einer weiteren vorteilhaften Ausgestaltung des Verfahrens ist vorgesehen, dass zumindest eine stabile Dreipunktauflage für das zumindest eine Gutteil in Abhängigkeit der Flächengeometrie des jeweiligen Gutteils ermittelt wird. Dabei werden bevorzugt jeweils weit voneinander entfernt liegende Punkte ermittelt, um eine sichere Auflage des zumindest einen Gutteils zu ermöglichen und ein Verkippen zu vermeiden. Durch diese zumindest als Dreipunktauflage ausgebildete Anordnung wird des Weiteren ermöglicht, dass auf eine Anzahl von Auflageelementen im Rahmen verzichtet werden kann, das heißt, dass die Werkstückauflage nicht mit allen Auflageelementen zu bestücken ist, welche von der Werkstückauflage aufgenommen werden können. Dadurch kann eine weitere Kosteneinsparung erzielt werden.

Nach einer alternativen Ausgestaltung des Verfahrens ist vorgesehen, dass aus der Flächengeometrie des zumindest einen Gutteils ein Flächenschwerpunkt ermittelt wird und die Lage von zumindest drei einander zugeordneten Tragpunktspitzen in Abhängigkeit des Flächenschwerpunktes zur stabilen Auflage des zumindest einen Gutteils ausgewählt werden. Diese alternative Operation ermöglicht ebenfalls eine Reduzierung der erforderlichen Auflageelemente sowie eine verkippungsfreie Aufnahme von zumindest einem Gutteil.

Nach einer weiteren vorteilhaften Ausgestaltung des Verfahrens ist vorgesehen, dass die Tragpunktspitzen für das zumindest eine Gutteil mit einer größeren Höhe als die Tragpunktspitzen für das zumindest eine Restteil ausgebildet werden. Dadurch können das oder die Gutteile erhöht gegenüber dem oder den Restteilen auf der Werkstückauflage aufliegen. Eine erleichterte Entnahme, insbesondere bei der Automatisierung, ist ermöglicht. Ebenso kann eine einfache Sichtkontrolle nach der vollständigen Bearbeitung des Werkstücks erfolgen.

Die Aufgabe wird erfindungsgemäß durch ein Computerprogramm gelöst, welches insbesondere in einer Datenverarbeitungsanlage in der Bearbeitungsmaschine vorgesehen ist und die Daten der ermittelten Schachtelung für den nächsten Bearbeitungsgang erfasst, so dass die aufgrund der Schachtelung erforderliche Tragpunktspitze oder Tragpunktspitzen den Auflageelementen zugeordnet werden, wobei gleichzeitig eine Auswahl in der Anzahl der Auflageelemente erfolgt. Zum einfachen Einbau der Auflageelemente werden diese nummeriert. Alternativ kann vorgesehen sein, dass auf einem Bildschirm angezeigt wird, an welcher Position ein Auflageelement mit der entsprechenden Anzahl der Tragpunktspitzen vorzusehen ist.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
- Figur 1: eine perspektivische Darstellung einer Werkstückauf- lage mit Auflageelementen, welche die erfindungs- gemäß zugeordneten Tragpunktspitzen umfassen und
- Figur 2: eine perspektivische Darstellung eines alternativen Anwendungsfalles zu Figur 1.

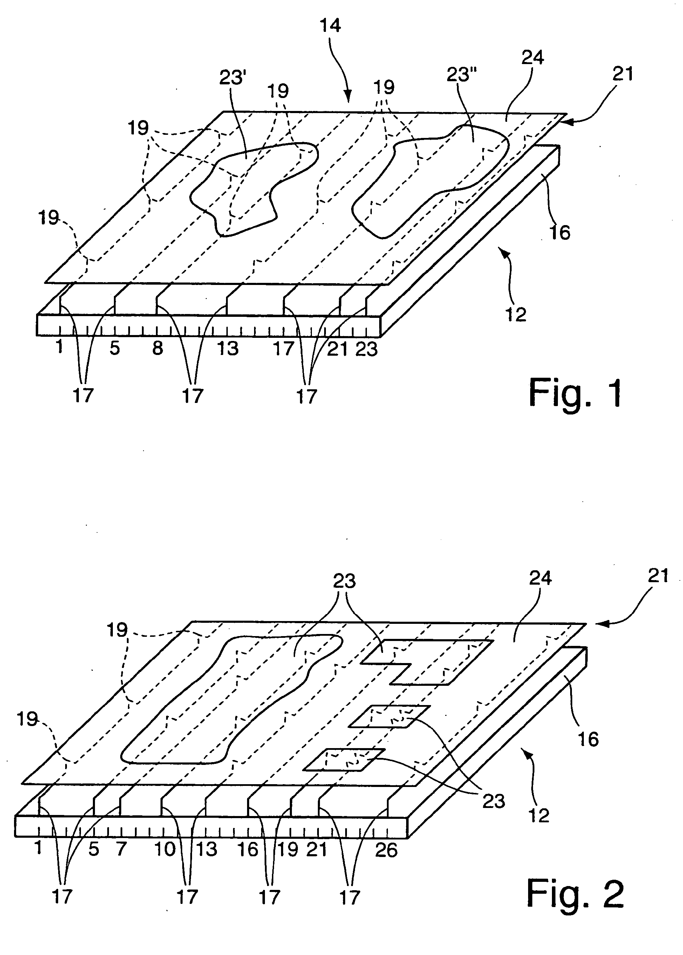

Figur 1 zeigt eine Werkstückauflage 12 einer nicht näher dargestellten Bearbeitungsanlage. Eine solche Bearbeitungsanlage kann insbesondere eine Laserbearbeitungsanlage sein.' Die Werkstückauflage 12 dient zur Aufnahme eines zu bearbeitenden Werkstückes 14, welches beispielsweise in einem Be- und Entlagebereich der Bearbeitungsanlage auf die Werkstückauflage 12 aufgelegt wird, bevor die Werkstückauflage 12 in einen Bearbeitungsbereich der Bearbeitungsanlage eingefahren wird. In der Bearbeitungsanlage wird mittels einem Schneidstrahl, insbesondere einem Laserschneidstrahl, eine Schneidkontur in das Werkstück 14 eingebracht. Dabei wird bevorzugt ein Schneidkopf oberhalb des Werkstücks verfahren. Nach dem Bearbeiten des Werkstücks 14 wird die Werkstückauflage 12 aus der Bearbeitungsanlage herausgeführt und manuell oder bevorzugt automatisch entladen und für den nachfolgenden Bearbeitungsprozess vorbereitet.

Die Werkstückauflage 12 umfasst einen Rahmen 16, der eine Vielzahl von nebeneinander angeordneten Auflageelementen 17 aufnimmt, die austauschbar am Rahmen 16 vorgesehen sind. Der Rahmen 16 ist verfahrbar zur Bearbeitungsmaschine vorgesehen oder Teil eines Maschinenbettes der Bearbeitungsmaschine. Die Auflageelemente 17 weisen bevorzugt Tragpunktspitzen 19 auf, welche eine Auflageebene 21 bilden, in der das Werkstück 14 positioniert wird.

In Figur 1 ist ein Rahmen 16 dargestellt, in dem eine Vielzahl von Auflageelementen 17 angeordnet sind, die Tragpunktspitzen 19 aufweisen und nach der Schneidbearbeitung Gutteile 23 und gemäß dem Ausführungsbeispiel ein Restteil 24 aufnehmen. Alternativ können auch mehrere Restteile 24 vorliegen. Die Anzahl der Tragpunktspitzen 19 sowie deren Positionierung innerhalb des Rahmens 16 an einzelnen Auflageelementen 21 ist durch das erfindungsgemäße Verfahren zur Optimierung einer Anordnung von Tragpunktspitzen 19 an Auflageelementen 17 einer Werkstückauflage 12 erfolgt. Dabei können folgende Schritte vorgesehen sein:

In einer Datenverarbeitungsanlage der Bearbeitungsanlage sind für eine Schachtelung von Gut- und Restteilen Daten einer oder mehrerer Tafelbelegungen vorhanden. Darüber hinaus ist die Lage der einzelnen Auflageelemente 17 sowie die Anzahl der möglichen Auflageelemente 17 im-Rahmen 16 ebenfalls hinterlegt. Durch die Lage des Auflageelements 17 ergibt sich theoretisch, dass entlang des jeweiligen Auflageelementes 17 unendlich viele Tragpunktspitzen 19 vorgesehen sein können, um das Werkstück 14 aufzunehmen. Die Abstände der Auflageelemente 17 zueinander ist durch eine Rasterung im Rahmen 16 festgelegt. Alternativ kann auch eine variable Aufnahme vorgesehen sein, so dass die Auflageelemente 17 in anwendungsspezifisch ermittelten Positionen am Rahmen fixiert werden.

Aufgrund der Schachtelung für die zur Bearbeitung anstehende Tafelbelegung sind die Verläufe der Schneidkontur für jedes Gutteil bekannt. Ausgehend hiervon wird zum einen ein streifenförmiger Bereich links und rechts benachbart zur Schneidkontur festgelegt, in dem keine Tragpunktspitzen vorgesehen sein sollen, damit ein Verbacken der Teile beim Überfahren des Schneidstrahls verhindert wird. Des Weiteren soll ein Beschädigen oder Aufschmelzen der Tragpunktspitzen verhindert werden. Die Bandbreite links und rechts benachbart zur Schneidkontur kann in Abhängigkeit der Schneidspaltbreite, der Intensität des Schneidstrahles, der Dicke des zu bearbeitenden Materials, als auch an die Größe des Gutteils beziehungsweise der benachbart zueinander liegenden Teile angepasst werden. Des Weiteren wird die Flächengeometrie des zumindest einen Gutteils aufgrund der vorliegenden Daten der Tafelbelegung ausgewertet. Dabei werden Bereiche für die Tragpunktspitzen ausgewählt, die innerhalb der Schneidkontur für das jeweilige Gutteil liegen und eine stabile und verkippungsfreie Auflage des Gutteils ermöglichen. Dabei wird zumindest eine Anzahl von drei Tragpunktspitzen einem Gutteil zugeordnet, die beispielsweise in der Position zueinander in Abhängigkeit der Schwerpunktlage des Gutteils bestimmt werden. Weitere Bestimmungsparameter können ebenfalls zugrunde gelegt werden.

Darüber hinaus können in Abhängigkeit der Materialstärke, der Geometrie der Gutteile und der Bearbeitungsparameter die Geometrien der Tragpunktspitzen ausgewählt oder angepasst werden. Zumeist sind spitzwinklige oder dreieckförmige Tragpunktspitzen vorgesehen. Ebenso kann die Auflageebene durch Stege mit horizontalen Abschnitten, gestuften Stege oder wellenlinienförmige, sägezahnförmige, rechteckförmige Konturen oder dergleichen ausgebildet werden.

In Abhängigkeit von den ermittelten Positionen der einzelner Tragpunktspitzen 19 innerhalb der Auflageebene 21 werden diese den entsprechenden Auflageelementen 17 zugeordnet und die Konfiguration einzelner Auflageelemente 17 mit der zumindest einen Tragpunktspitze 19 abgespeichert. Anschließend werden die Auflageelemente 17 nacheinander zugeschnitten oder mit einzelnen Tragelementen 19 bestückt. Darüber hinaus wird das jeweilige Auflageelement 17 mit einer Positionsnummer versehen, so dass das Auflageelement 17 in einer bestimmten Position im Rahmen 16 eingesetzt wird.

Aus diesem Verfahren zur Optimierung der Anordnung von Tragpunktspitzen 19 ergibt sich beispielsweise die Ausgestaltung einer Werkstückauflage 12 gemäß Figur 1. In Position 1, 13 und 23 ist jeweils ein Auflageelement 17 vorgesehen, das beispielsweise drei Tragpunktspitzen 19 umfasst, um das Restteil 24 ohne Verkippung aufzunehmen. Für das Gutteil 23' sind beispielsweise die Auflageelemente 17 in Position 5 und 8 vorgesehen, wobei das Auflageelement 17 in Position 5 lediglich eine Tragpunktspitze 19 umfasst und das Auflageelement 17 in Position 8 zwei Tragpunktspitzen 19 aufweist. Dadurch ist eine Dreipunktauflage für das Gutteil 23' vorgesehen. Diese Tragpunktspitzen 19 für das Gutteil 23' sind bevorzugt etwas höher als Tragpunktspitzen 19 des Auflageelementes 17 in Position 1 ausgebildet.

Die Auflageelemente 17 in Position 17 und 21 für das Gutteil 23" sind in Analogie zu dem Gutteil 23' ausgebildet. Bei einer in Figur 1 dargestellten Tafelbelegung wird deutlich, dass nur einzelne Auflageelemente 17 erforderlich sind, um eine Auflage 21 auszubilden.

In Figur 2 ist eine alternative Tafelbelegung zu Figur 1 dargestellt. Nach dem erfindungsgemäßen Verfahren können beide Tafelbelegungen kumuliert erfasst und hinsichtlich der Ausgestaltung der Auflageelemente 17 ausgewertet werden. Daraus ergibt sich der Vorteil, dass einzelne oder alle Auflageelemente 17 beim Wechseln der Tafelbelegung beibehalten werden können. Weitere Auflageelemente 17 können entfernt oder hinzugefugt und/oder versetzt werden.

Die Auflageelemente 17 gemäß Figur 2 in den Positionen 1, 13 können beispielsweise verbleiben. Das Auflageelement 17 in Position 23 gemäß Figur 1 wird beispielsweise in Position 26 gemäß Figur 2 umgesetzt. Des Weiteren werden beim Beispiel gemäß Figur 2 die Auflageelemente 5 und 10 neu hinzugefügt, wobei das Auflageelement 17 gemäß Figur 1 in Position 5 an die Position 7 im Rahmen 16 gemäß Figur 2 umgesetzt werden kann. Anhand dieser Bespiele wird deutlich, dass durch die Kumulierung unterschiedlicher Tafelbelegungen eine Reduzierung der Rüstzeit und Reduzierung der Kosten für die Herstellung von tafelbelegungsspezifischen Auflageelementen 17 ermöglicht ist.

Des Weiteren kann vorgesehen sein, dass die einzelnen Rahmen 16 mit tafelspezifischen Auflageelementen 17 und deren Tragpunktspitzen 19 bestückt sind und in einem Lager bereitgestellt werden. Durch einen Wechsel der Rahmen kann im sogenannten Hilfspalettenbetrieb ebenfalls eine tafelspezifische Aufnahme vorgesehen sein.

Die einzelnen Parameter zur Bestimmung der Lage der Tragpunktspitzen 19 innerhalb einer Werkstückauflage 12 werden nacheinander abgearbeitet und gegenseitig abgeglichen, so dass eine anwendungsoptimierte Anfertigung von einer Werkstückauflage für die zur Bearbeitung anstehende Tafelbelegung ermöglicht wird.

Alternativ zu den an den Auflageelementen 17 durch eine Schneidbearbeitung fest angeordneten Tragpunktspitzen 19 können diese Tragpunktspitzen durch Tragelemente ausgebildet sein, die an dem jeweiligen ermittelten Ort beziehungsweise der Lage der Tragpunktspitzen auf das Auflageelement 17 aufgesetzt werden. Dabei kann zum Be- und Entstücken der Tragelemente bevorzugt eine Handhabungseinrichtung, wie beispielsweise ein ein- oder mehrachsiges Linearachsensystem oder ein Roboter vorgesehen sein, der nach der Ermittlung der Position der Tragpunktspitzen die Auflageelemente 17 mit den Tragelementen bestückt. Bei einem Wechsel der Lage der Tragelemente kann dies ebenfalls durch ein solches Handhabungssystem erfolgen. Am Ende der Bearbeitung können sämtliche Tragelemente von den Auflageelementen 17 entfernt werden, so dass eine neutralisierte Werkstückauflage geschaffen ist. Solche Handhabungseinrichtungen können sowohl das Beladen des zu bearbeitenden Plattenmaterials auch das Entladen von Gut- und Restteilen durchführen.

## Patentansprüche

1. Verfahren zur Optimierung einer Anordnung von Tragpunktspitzen (19) an Auflageelementen (17) einer Werkstückauflage (12) zur Aufnahme eines insbesondere tafelförmigen Werkstücks (14) in einer Bearbeitungsanlage, bei dem das Werkstück (14) mit einem Schneidstrahl bearbeitet wird, **dadurch gekennzeichnet,**
- **dass** Daten einer Schachtelung von zumindest einem Gut- und Restteil (23, 24) von der zumindest einen, zur Bearbeitung anstehenden Tafelbelegung in Bezug auf eine Flächengeometrie des zumindest einen Gutteils (23) und einem Verlauf des Schneidspaltes erfasst werden,
- **dass** zumindest in Abhängigkeit der Flächengeometrie des zumindest einen Gutteils (23) und dem Verlauf des Schneidspaltes die Lage und Anzahl der Tragpunktspitzen (19) ermittelt werden,
- **dass** die ermittelte Tragpunktspitze oder Tragpunktspitzen (19) den Auflageelementen (17) zugeordnet werden und
- **dass** an jedem zugeordneten Auflageelement (17) mit zumindest einer Tragpunktspitze (19) eine Positionsnummer zum Einbau im Rahmen (16) der Werkstückauflage (12) versehen wird.

2. Verfahren nach Anspruch 1, **dadurch gekennzeichnet,**
- **dass** die Daten von mehreren Tafelbelegungen kumuliert in Bezug auf die Flächengeometrie des zumindest einen Gutteils (23) und den Verlauf des Schneidspaltes erfasst werden und dass die Lage und Anzahl der Tragpunktspitzen (19) ermittelt werden, so dass mit einer Auswahl an Tragpunktspitzen (19) mehrere Tafelbelegungen ermöglicht sind.

3. Verfahren nach Anspruch 1 oder 2, **dadurch gekennzeichnet, dass**
- in Abhängigkeit der zur Bearbeitung anstehenden Tafelbelegung oder dem Tafelbelegungen der Rahmen (16) mit zumindest einem zusätzlichen Auflageelement (17) bestückt oder zumindest ein Auflageelement (17) aus dem Rahmen (16) entfernt oder zumindest ein Auflageelement (17) im Rahmen (16) umgesetzt wird und
- die Positionsnummern der Auflageelemente (17) für die zur Bearbeitung anstehende Tafelbelegung ausgegeben oder angezeigt werden.

4. Verfahren nach Anspruch 1, **dadurch gekennzeichnet, dass** die zumindest eine Tragpunktspitze (19)
- aus dem Auflageelement (17) mit einem Schneidstrahl ausgeschnitten wird,
- als separates Tragelement ausgebildet ist und auf das Auflageelement (17) oder daran vorgesehenen Tragpunktspitzen (19) aufgesetzt wird,
- als verschiebbares oder klappbares Tragelement ausgebildet ist und auf dem Auflageelement (17) oder daran vorgesehenen Tragpunktspitzen (19) in die ermittelte Position verschoben oder positioniert wird oder
- durch Abbrechen oder Umbiegen von zumindest einer benachbarten Tragpunktspitze (19) bei einem aus mehreren Tragpunktspitzen (19) bestehenden Auflageelementes (17) ausgebildet. wird.

5. Verfahren nach einem der vorhergehenden Ansprüche, **dadurch gekennzeichnet, dass** zur Ermittlung der Lage der zumindest einen Tragpunktspitze (19) eine Kollisionsprüfung mit dem Verlauf der Schneidkontur des zumindest einen Gutteils (23) durchgeführt wird.

6. Verfahren nach einem der vorhergehenden Ansprüche, **dadurch gekennzeichnet, dass** die Lage der Tragpunktspitzen (19) in Abhängigkeit einer Nullpunktlage für das zumindest eine auf der Werkstückauflage (12) aufliegende Werkstück (14) ermittelt und ausgegeben werden.

7. Verfahren nach einem der vorhergehenden Ansprüche, **dadurch gekennzeichnet, dass** zumindest eine stabile Dreipunktauflage für das zumindest eine Gutteil (23) in Abhängigkeit dessen Flächengeometrie ermittelt wird.

8. Verfahren nach einem der vorhergehenden Ansprüche, **dadurch gekennzeichnet, dass** aus der Flächengeometrie des zumindest einen Gutteils (23) ein Flächenschwerpunkt ermittelt wird und die Lage von zumindest drei einander zugeordneten Tragpunktspitzen (19) zur stabilen Auflage des Gutteils (23) ausgewählt wird.

9. Verfahren nach einem der vorhergehenden Ansprüche, **dadurch gekennzeichnet, dass** die Tragpunktspitzen (19) für das zumindest eine Gutteil (23) mit einer größeren Höhe als die Tragpunktspitzen (19) für das zumindest eine Restteil (24) ausgebildet werden.

10. Computerprogramm zur Optimierung einer Anordnung von Tragpunktspitzen (19) an Auflageelementen (17) einer Werkstückauflage (12) zur Aufnahme eines insbesondere tafelförmigen Werkstucks (14) in einer Bearbeitungsanlage, bei dem das Werkstück (14) mit einem Schneidstrahl bearbeitet wird, **dadurch gekennzeichnet,**
- dass Daten einer Schachtelung von zumindest einem Gut- und Restteil (23, 24) von der zumindest einen, zur Bearbeitung anstehenden Tafelbelegung in Bezug auf eine Flächengeometrie des zumindest einen Gutteils (23) und einem Verlauf des Schneidspaltes erfasst werden,
- dass zumindest in Abhängigkeit der Flächengeometrie des zumindest einen Gutteils (23) und dem Verlauf des Schneidspaltes die Lage und Anzahl der Tragpunktspitzen (19) ermittelt werden,
- dass die ermittelte Tragpunktspitze oder Tragpunktspitzen (19) den Auflageelementen (17) zugeordnet werden und
- dass an jedem zugeordneten Auflageelement (17) mit zumindest einer Tragpunktspitze (19) eine Positionsnummer zum Einbau im Rahmen (16) der Werkstückauflage (12) versehen wird.

## Claims

1. A method of optimising an arrangement of carrier tips (19) on support elements (17) of a workpiece support (12) for receiving a workpiece (14), in particular of slab-like shape, in a machining unit, wherein the workpiece (14) is machined using a cutting beam, **characterised in that**
- data concerning a nesting of at least one product portion and one remainder portion (23, 24) of the at least one sheet layout to be processed is collected with respect to a surface geometry of the at least one product portion (23) and to a path of the cutting gap,
- depending on at least the surface geometry of the at least one product portion (23) and the path of the cutting gap, the number and position(s) of the carrier tips (19) are determined,
- the determined carrier tip or carrier tips (19) are associated with the support elements (17), and
- each associated support element (17) having at least one carrier tip (19) is provided with a position number, in view of its mounting in the frame (16) of the workpiece support (12).

2. The method as claimed in claim 1, **characterised in that**
- the data corresponding to a plurality of sheet layouts is collected in an accumulated manner with respect to the surface geometries of the at least one product portion (23) and the paths of the cutting gap, and that the numbers and positions of the carrier tips (19) are determined in such a way that one selection of carrier tips (19) may be used for said plurality of sheet layouts.

3. The method as claimed in claim 1 or 2, **characterised in that**
- depending on the sheet layout, or the sheet layouts, to be processed, the frame (16) is equipped with at least one additional support element (17) or at least one support element (17) is removed from the frame (16) or at least one support element (17) is moved to another position within the frame (16), and
- the position numbers of the support elements (17) for the sheet layout to be processed are output or displayed.

4. The method as claimed in claim 1, **characterised in that** the at least one carrier tip (19)
- is cut out from the support element (17) using a cutting beam,
- is realised as a separate carrier element and is placed on the support element (17) or on carrier tips (19) provided thereon,
- is realised as a slidable or folding carrier element and is slid or positioned in such a manner on the support element (17), or on carrier tips (19) provided thereon, as to occupy the determined position, or
- is realised by breaking or bending at least one adjacent carrier tip (19) in a support element (17) consisting of a plurality of carrier tips (19).

5. The method as claimed in any one of the preceding claims, **characterised in that** for determining the position of the at least one carrier tip (19), a collision test with the path of the cutting contour of the at least one product portion (23) is performed.

6. The method as claimed in any one of the preceding claims, **characterised in that** the positions of the carrier tips (19) are determined and output relative to a zero position for the at least one workpiece (14) lying on the workpiece support (12).

7. The method as claimed in any one of the preceding claims, **characterised in that** at least one stable three-point support for the at least one product portion (23) is determined in dependence on the surface geometry thereof.

8. The method as claimed in any one of the preceding claims, **characterised in that** the surface geometry of at least one product portion (23) is used to determine an areal centre of gravity thereof and the positions of at least three carrier tips (19) associated with one another are selected so as to provide a stable support to the product portion (23).

9. The method as claimed in any one of the preceding claims, **characterised in that** the carrier tips (19) for the at least one product portion (23) are formed with a height superior to that of the carrier tips (19) for the at least one remainder portion (24).

10. A computer programme for optimising an arrangement of carrier tips (19) on support elements (17) of a workpiece support (12) for receiving a workpiece (14), in particular of slab-like shape, in a machining unit, wherein the workpiece (14) is machined using a cutting beam, **characterised in that**
- data concerning a nesting of at least one product portion and one remainder portion (23, 24) of the at least one sheet layout to be processed is collected with respect to a surface geometry of the at least one product portion (23) and to a path of the cutting gap,
- depending on at least the surface geometry of the at least one product portion (23) and the path of the cutting gap, the number and position(s) of the carrier tips (19) are determined,
- the determined carrier tip or carrier tips (19) are associated with the support elements (17), and
- each associated support element (17) having at least one carrier tip (19) is provided with a position number, in view of its mounting in the frame (16) of the workpiece support (12).

## Revendications

1. Procédé permettant d'optimiser un agencement de pointes de support (19) prévues sur des éléments d'appui (17) d'un porte-pièce (12) destiné à recevoir une pièce à usiner (14), notamment en forme de plaque, dans une unité d'usinage, lors duquel la pièce à usiner (14) est usinée au moyen d'un jet de coupe, **caractérisé en ce que**
- des données d'un emboîtement d'au moins une partie utile et une partie restante (23, 24) de ladite au moins une occupation de la plaque devant être usinée sont saisies en fonction d'une géométrie de surface de ladite au moins une partie utile (23) et d'un tracé du jeu de coupe,
- la position et le nombre des pointes de support (19) sont déterminés au moins en fonction de la géométrie de surface de ladite au moins une partie utile (23) et du tracé du jeu de coupe,
- la pointe de support ou les pointes de support (19) déterminée(s) est/sont attribuée(s) aux éléments d'appui (17), et
- chaque élément d'appui (17) attribué présentant au moins une pointe de support (19) est pourvu d'un numéro de position en vue de son installation dans le cadre (16) du porte-pièce (12).

2. Procédé selon la revendication 1, **caractérisé en ce que**
- les données de plusieurs occupations de plaque sont saisies de manière cumulée en fonction de la géométrie de surface de ladite au moins une partie utile (23) et du tracé du jeu de coupe, et **en ce que** la position et le nombre des pointes de support (19) sont déterminés de manière à rendre possible, avec un seul choix de pointes de support (19), plusieurs occupations de plaque.

3. Procédé selon la revendication 1 ou 2, **caractérisé en ce que**
- en fonction de l'occupation de la plaque ou des plaques devant être usinée(s), le cadre (16) est équipé d'au moins un élément d'appui (17) supplémentaire, ou au moins un élément d'appui (17) est retiré du cadre (16), ou au moins un élément d'appui (17) est déplacé dans le cadre (16), et **en ce que**
- les numéros de position des éléments d'appui (17) pour l'occupation de la plaque devant être usinée sont sortis ou affichés.

4. Procédé selon la revendication 1, **caractérisé en ce que** ladite au moins une pointe de support (19)
- est découpée dans l'élément d'appui (17) au moyen d'un jet de coupe,
- est réalisée sous forme d'élément support séparé et posée sur l'élément d'appui (17) ou sur les pointes de support (19) prévues sur celui-ci,
- est réalisée sous forme d'élément support coulissant ou rabattable, et est déplacée ou positionnée dans la position déterminée sur l'élément d'appui (17) ou sur les pointes de support (19) prévues sur celui-ci, ou
- est formée par cassure ou pliage d'au moins une pointe de support (19) voisine dans le cas d'un élément d'appui (17) comprenant plusieurs pointes de support (19).

5. Procédé selon l'une des revendications précédentes, **caractérisé en ce que**, pour déterminer la position de ladite au moins une pointe de support (19), une détection de collision est réalisée avec le tracé du contour de coupe de ladite au moins une partie utile (23).

6. Procédé selon l'une des revendications précédentes, **caractérisé en ce que** la position des pointes de support (19) est déterminée et sortie en fonction d'une position zéro pour ladite au moins une pièce à usiner (14) reposant sur le porte-pièce (12).

7. Procédé selon l'une des revendications précédentes, **caractérisé en ce qu'**au moins un appui stable sur trois points est déterminé pour ladite au moins une partie utile (23) en fonction de sa géométrie de surface.

8. Procédé selon l'une des revendications précédentes, **caractérisé en ce qu'**un centre de gravité de surface est déterminé à partir de la géométrie de surface de ladite au moins une partie utile (23), et **en ce que** la position d'au moins trois pointes de support (19) agencées les unes par rapport aux autres est sélectionnée en vue d'obtenir un appui stable de la partie utile (23).

9. Procédé selon l'une des revendications précédentes, **caractérisé en ce que** les pointes de support (19) pour ladite au moins une partie utile (23) sont formées de manière à présenter une hauteur supérieure à celle des pointes de support (19) pour ladite au moins une partie restante (24).

10. Programme informatique permettant d'optimiser un agencement de pointes de support (19) sur des éléments d'appui (17) d'un porte-pièce (12) destiné à recevoir une pièce à usiner (14), notamment en forme de plaque, dans une unité d'usinage, dans lequel la pièce à usiner (14) est usinée au moyen d'un jet de coupe, **caractérisé en ce que**
- des données d'un emboîtement d'au moins une partie utile et une partie restante (23, 24) de ladite au moins une occupation de la plaque devant être usinée sont saisies en fonction d'une géométrie de surface de ladite au moins une partie utile (23) et d'un tracé du jeu de coupe,
- la position et le nombre des pointes de support (19) sont déterminés au moins en fonction de la géométrie de surface de ladite au moins une partie utile (23) et du tracé du jeu de coupe,
- la pointe de support ou les pointes de support (19) déterminée(s) est/sont attribuée(s) aux éléments d'appui (17), et
- chaque élément d'appui (17) attribué présentant au moins une pointe de support (19) est pourvu d'un numéro de position en vue de son installation dans le cadre (16) du porte-pièce (12).
